# EUROPÄISCHE PATENTSCHRIFT

(11) **EP 2 730 952 B1**
(45) Veröffentlichungstag und Bekanntmachung des Hinweises auf die Patenterteilung: **29.08.2018**
(21) Anmeldenummer: 12191929.4
(22) Anmeldetag: 09.11.2012
(51) Int. Cl.: G01V 8/20

(54) **Lichtgitter**
Light grid
Grille lumineuse

(43) Veröffentlichungstag der Anmeldung: 14.05.2014
(73) Patentinhaber: SICK AG, 79183 Waldkirch/Breisgau (DE)
(72) Erfinder: Wolf, Peter, 79206 Breisach-Gündlingen (DE); Scholz, Michael, 79110 Freiburg (DE); Klingelhöfer, Christian, 79117 Freiburg (DE); Henkel, Olaf, 79276 Reute (DE)
(74) Vertreter: Manitz Finsterwald Patentanwälte PartmbB

(56) Entgegenhaltungen:
- EP-A1- 1 577 684
- EP-A1- 2 192 423
- EP-A2- 0 369 386
- EP-A2- 1 439 404
- JP-A- 2003 317 586
- US-A- 5 925 858
- US-A- 6 051 829
- US-A1- 2001 025 918

## Beschreibung

Die Erfindung betrifft ein Lichtgitter mit einem oder mehreren Lichtgittergehäusen mit wenigstens einem länglichen, sich in einer Längsrichtung des Lichtgittergehäuses erstreckenden Basisteil, welches zwei sich in der Längsrichtung erstreckende, seitlich voneinander beabstandete Seitenwände und eine sich zwischen den Seitenwänden erstreckende Frontwand umfasst, wobei die Frontwand eine Vielzahl von Lichtdurchtrittsöffnungen aufweist.

Lichtgitter werden in großem Umfang für die Erkennung und Vermessung von Gegenständen auf Förderbahnen, zur Gepäckkontrolle auf Förderbändern, zur Türsteuerung in Aufzügen, für den Hand- oder Körperschutz bei Arbeitsmaschinen, für die Zugangskontrolle von Personen und Fahrzeugen usw. verwendet. Die Lichtgitter bestehen in der Regel aus einer Sendeeinheit mit in einem leistenförmigen Lichtgittergehäuse beabstandet angeordneten Lichtsendern und einer Empfangseinheit mit in einem ebenfalls leistenförmigen Lichtgittergehäuse entsprechend beabstandet angeordneten Lichtempfängern. Die Lichtsender senden Lichtstrahlen aus, welche auf die Lichtempfänger auftreffen. Die Unterbrechung der Lichtstrahlen wird detektiert und ausgewertet.

Bei der Sendeeinheit sendet jeder Lichtsender Licht aus, welches durch ein oder mehrere nachgeordnete optische Funktionselemente, beispielsweise eine Linse oder eine Blende, in Richtung des jeweils zugeordneten Lichtempfängers der gegenüberliegenden Empfangseinheit gebündelt oder gelenkt wird. Jeder Lichtempfänger kann ebenfalls ein oder mehrere entsprechende optische Funktionselemente aufweisen, welches das Licht auf einen optoelektronischen Wandler sammelt.

Bekannte Lichtgitter bzw. Lichtgittergehäuse sind in US 6 051 829 A, EP 0 369 386 A2, US 5 925 858 A, EP 1 439 404 A2, EP 1 577 684 A1 und EP 2 192 423 A1 beschrieben.

In den Lichtgittergehäusen müssen neben den Lichtsendern und Lichtempfängern zusätzlich auch elektronische Bauelemente von Steuer- und/oder Auswerteschaltungen untergebracht werden. Da aus Platzgründen eine möglichst kompakte Bauweise des Lichtgittergehäuses angestrebt wird und auch der Abstand zwischen zwei benachbarten Lichtsendern bzw. Lichtempfängern möglichst gering gehalten werden soll, um eine hohe räumliche Auflösung zu erreichen, steht für die elektronischen Bauelemente häufig nur ein begrenzter Einbauraum zur Verfügung oder es ist eine großzügige Dimensionierung des Lichtgittergehäuses erforderlich.

Es ist daher die Aufgabe der Erfindung, ein Lichtgitter zu schaffen, welches bei kompakten Abmessungen einen ausreichenden Bauraum für die Lichtsender und Lichtempfänger sowie gegebenenfalls für weitere elektronische Bausteine und zugehörige optische Elemente (wie z.B. Blende, Tubus, Linse, Brennweite) bereitstellt.

Die Lösung der Aufgabe erfolgt durch ein Lichtgitter mit den Merkmalen des Anspruchs 1. Bei dem erfindungsgemäßen Lichtgitter sind die Lichtdurchtrittsöffnungen in zwei seitlich voneinander beabstandeten, sich in Längsrichtung des Basisteils erstreckenden Reihen angeordnet.

Der Lichteintritt bzw. der Lichtaustritt erfolgt auf der Frontseite des Lichtgitters bzw. des Lichtgittergehäuses, wobei die Frontwand der Frontseite zugewandt ist. Die Frontwand kann Eintiefungen, Aperturen oder sonstige Aufnahmen aufweisen, in welche die vorstehend genannten optischen Funktionselemente angeordnet werden können, wobei diese auch unterschiedliche optische Werte aufweisen können (z.B. für Sender oder Empfänger) .

Bei dem erfindungsgemäßen Lichtgitter ist es vorgesehen, nur eine der beiden Reihen von Lichtdurchtrittsöffnungen mit entsprechenden Lichtsendern und Lichtempfängern zu bestücken, wobei sich die Sende- bzw. Empfangseinheiten zumeist unterhalb der Lichtdurchtrittsöffnungen befinden. Der Bauraum im Innenraum des Lichtgittergehäuses, der sich unterhalb der nicht genutzten Reihe von Lichtdurchtrittsöffnungen befindet, kann für die Anordnung von zusätzlichen elektronischen Bauelementen genutzt werden.

Die Bestückung der sendeseitigen und der empfangsseitigen Lichtgittergehäuse erfolgt vorzugsweise so, dass die Lichtsender der einen, z.B. der linken Reihe und die Lichtempfänger der anderen, z.B. der rechten Reihe des jeweiligen Lichtgittergehäuses zugeordnet sind. Die derart bestückten Lichtgittergehäuse können dann ohne seitlichen Versatz einander gegenüberliegend montiert werden, so dass stets gewährleistet ist, dass die von einem bestimmten Lichtsender ausgesandten Lichtstrahlen auch versatzfrei auf den zugeordneten Lichtempfänger treffen.

Im Vergleich mit einem Lichtgittergehäuse, welches nur eine einzige, mittig angeordnete Reihe von Lichtdurchtrittsöffnungen aufweist, ist durch die aufgrund der erfindungsgemäßen zweireihigen Anordnung der Lichtdurchtrittsöffnungen eine asymmetrische Platzierung der Lichtsender bzw. Lichtempfänger bei ansonsten gleichen Abmessungen des Lichtgittergehäuses und damit eine wesentlich bessere Raumausnutzung möglich. Da aufgrund der erfindungsgemäßen zweireihigen Anordnung der Lichtdurchtrittsöffnungen im Vergleich zu dem genannten Lichtgittergehäuse mit einreihig angeordneten Lichtdurchtrittsöffnungen die Lichtdurchtrittsöffnungen näher an die Seitenwände herangerückt sind, ist der seitliche Abstand im Bereich der nicht genutzten Reihe von Lichtdurchtrittsöffnungen deutlich vergrößert.

Weiterhin entsteht im mittigen Bereich zwischen den Seitenwänden bzw. zwischen den beiden Reihen ein nicht durch Lichtdurchtrittsöffnungen belegter Bereich zur Verfügung, in dem - vorteilhafterweise in symmetrischer Weise - Zusatzeinrichtungen wie etwa Befestigungsbohrungen, Anzeigeelemente oder auch Steckverbindungen zwischen mehreren im Inneren des Lichtgittergehäuses vorgesehenen Leiterplatten angeordnet werden können, ohne dass diese bei der Bemessung des Abstandes zwischen zwei in Längsrichtung benachbarten Lichtdurchtrittsöffnungen berücksichtigt werden müssten.

Somit wird der Mindestabstand zwischen zwei in Längsrichtung benachbarten Lichtdurchtrittsöffnungen alleine durch die Abmessungen der zugeordneten Lichtsender bzw. Lichtempfänger unter Berücksichtigung der gewünschten räumlichen Lichtgitterauflösung bestimmt und nicht etwa durch ggf. erforderliche Zusatzeinrichtungen des Lichtgitters.

Vorzugsweise sind die Lichtdurchtrittsöffnungen in der Längsrichtung gleichmäßig beabstandet, wobei aber grundsätzlich auch unterschiedliche Abstände möglich sind.

Gemäß einer vorteilhaften Ausführungsform sind die beiden Reihen von Lichtdurchtrittsöffnungen in der Längsrichtung betrachtet versatzfrei angeordnet. Somit liegen zwei unmittelbar benachbarte, jedoch verschiedenen Reihen zugeordnete Lichtdurchtrittsöffnungen auf einer Linie, die senkrecht zur Längsrichtung des Lichtgittergehäuses bzw. des Basisteils verläuft. Die Lichtdurchtrittsöffnungen bilden demnach eine quadratische oder rechteckige Gitteranordnung, wobei in der Mitte eines von vier benachbarten Lichtdurchtrittsöffnungen begrenzten Rechtecks oder Quadrats eine mögliche Position für die vorstehend erwähnten Zusatzeinrichtungen, Montagebohrungen oder Anzeigeelemente gegeben ist.

Vorteilhafterweise ist jeder Lichtdurchtrittsöffnung ein die Lichtdurchtrittsöffnung umschließender Tubus zugeordnet, welcher sich von der Frontwand in einem von den Seitenwänden umgrenzten Innenraum des Basisteils erstreckt, wobei bevorzugt jeder Tubus einstückig mit dem Basisteil gebildet ist. An einem der Lichtdurchtrittsöffnung gegenüberliegenden Ende eines jeden Tubus kann ein Lichtsender oder ein Lichtempfänger angeordnet werden, wobei das genannte Ende des Tubus eine Apertur aufweisen kann.

Gemäß einer weiteren vorteilhaften Ausführungsform der Erfindung sind die Wandungen zumindest eines Teils der Tuben unmittelbar und/oder über einen Steg mit der dem jeweiligen Tubus benachbarten Seitenwand verbunden. Hierdurch wird eine Versteifung des Lichtgittergehäuses erzielt. Bei dem erstgenannten Fall, bei dem die Wandungen der Tuben unmittelbar mit der Seitenwand verbunden sind, können die jeweiligen Abstände und Wandstärken so bemessen werden, dass zumindest im Bereich des geringsten Abstandes zwischen einem Tubus und der zugeordneten Seitenwand die Seitenwand zugleich ein Teil der Tubuswandung ist.

Vorzugsweise ist die Wandung eines Tubus über einen Steg mit einer Wandung eines in diagonaler Richtung benachbarten Tubus verbunden. So ist ein in einer bestimmten Reihe angeordneter Tubus über den genannten Steg mit einem Tubus der anderen Reihe verbunden, wobei sich der Abstand der beiden verbundenen Tuben in der Längsrichtung des Lichtgittergehäuses betrachtet von dem Abstand zweier benachbarter Lichtdurchtrittsöffnungen derselben Reihe unterscheidet. Die diagonal zu der Längsrichtung verlaufenden Stege bewirken eine weitere Versteifung des Lichtgittergehäuses, wobei es auch möglich ist, dass sich verschiedene Stege kreuzen.

Es hat sich als vorteilhaft erwiesen, wenn das Basisteil wenigstens einen Montagedurchgang aufweist, welcher sich durch das Basisteil hindurch zwischen zwei sich gegenüberliegenden Außenwänden des Basisteils erstreckt. Die genannten Außenwände können sowohl die beiden Seitenwände als auch die Front- und Rückseite des Lichtgittergehäuses sein, wobei im letzteren Fall der Montagedurchgang bevorzugt mittig zwischen den Seitenwänden angeordnet ist. Der oder die Montagedurchgänge dienen der Aufnahme von Befestigungsmitteln, beispielsweise Schrauben, mit denen das Lichtgittergehäuse bzw. das Lichtgitter an einer Maschine, einem Fahrzeug, einer Wand etc. befestigt werden kann. Die Befestigungsmittel können also durch das Lichtgittergehäuse hindurchgesteckt werden. Es ist nicht erforderlich, dass zusätzliche Halteplatten oder dergleichen am Lichtgittergehäuse angeformt oder befestigt werden müssen oder dass das Lichtgittergehäuse für die Befestigung geöffnet werden muss. Die mittige Anordnung gewährleistet ein Montage- oder Bohrmuster, das für die sendeseitigen und die empfangsseitigen Lichtgittergehäuse gleich ist, was die Montage vereinfacht und mögliche Fehlerquellen ausschließt.

Der Montagedurchgang ist vorzugsweise so ausgestaltet, dass der Innenraum des Lichtgittergehäuses gegenüber dem Montagedurchgang abgedichtet ist. Somit stellt der Montagedurchgang keine Verbindung zwischen dem Inneren des Lichtgitters und der Umgebung her, so dass ein Eindringen von Feuchtigkeit oder Schmutz in das Lichtgitter vermieden wird.

In dem Zusammenhang ist es von Vorteil, wenn das Lichtgittergehäuse sowohl sich zwischen den Seitenwänden als auch sich zwischen der Front- und der Rückseite erstreckende Montagedurchgänge aufweist. Dadurch ist eine besonders flexible Befestigung des Lichtgittergehäuses möglich.

Gemäß einer weiteren vorteilhaften Ausführungsform ist die Rückseite des Basisteils zumindest abschnittsweise durch eine separat einsetzbare Bodenabdeckung verschlossen. Bei der Montage des Lichtgitters können bei abgenommener Bodenabdeckung zunächst die Lichtsender bzw. Lichtempfänger sowie zusätzliche Bauteile wie etwa Leiterplatten montiert werden. Erst nach erfolgter Montage wird das Basisteil durch die Bodenabdeckung verschlossen. Obwohl auch grundsätzlich eine gemeinsame Bodenabdeckung vorgesehen sein kann, die mehrere Basisteile überdeckt, ist es bevorzugt, wenn jedem Basisteil eine separate Bodenabdeckung zugeordnet ist.

Vorteilhafterweise ist die Frontwand des Basisteils durch eine lichtdurchlässige Frontabdeckung abgedeckt. Die Frontabdeckung verhindert das Eindringen von Schmutz und Feuchtigkeit in das Lichtgittergehäuse und schützt gleichzeitig etwaige in der Frontwand vorgesehene optische Funktionselemente vor Verschmutzung und Beschädigung. Es kann jedem Basisteil eine vorzugsweise separat ansetzbare Frontabdeckung zugeordnet sein.

Nach erfolgter Montage des Lichtgitters können die Bodenabdeckung und/oder die Frontabdeckung abdichtend mit dem zugeordneten Basisteil verbunden, insbesondere verschweißt oder verklebt, werden. Der vorstehend genannte, sich durch die Front- und Rückseite erstreckende Montagedurchgang erstreckt sich sinnvollerweise durch die Boden- bzw. Frontabdeckung hindurch.

Bei einer Ausgestaltung des Lichtgittergehäuses, bei welcher die Tuben einstückig mit dem Basisteil verbunden sind, sind bei der Montage also nur drei Gehäuseteile zu handhaben, nämlich das Basisteil, die Bodenabdeckung und die Frontabdeckung, was insbesondere bei einer nachfolgend näher erläuterten modularen Anordnung von Vorteil ist.

Gemäß einer weiteren vorteilhaften Ausführungsform der Erfindung umfasst das Lichtgittergehäuse mehrere in der Längsrichtung nacheinander angeordnete, durch eine jeweilige Steckverbindung verbindbare Gehäusemodule, wobei ein jeweiliges Gehäusemodul ein genanntes Basisteil oder ein Abschlussteil umfasst, wobei das Abschlussteil zumindest zwei sich in der Längsrichtung erstreckende, seitlich voneinander beabstandete Seitenwände und eine sich zwischen den Seitenwänden erstreckende, quer zu der Längsrichtung verlaufende Stirnwand aufweist. Es versteht sich, dass ein etwaiges Abschlussteil lediglich endseitig in einer derartigen modularen Anordnung vorgesehen ist. Es ist jedoch nicht ausgeschlossen, dass auch ein endseitig angeordnetes Basismodul eine Stirnwand aufweisen kann.

Bei dieser besonders vorteilhaften Ausführungsform wird also ein modularer Aufbau verwirklicht, bei dem insbesondere vormontierte, d.h. mit Lichtsendern bzw. Lichtempfängern, Leiterplatten, Frontabdeckungen, Bodenabdeckungen etc. versehene Gehäusemodule in annähernd beliebiger Anzahl kombiniert werden können. Somit können eine Vielzahl von unterschiedlichen Lichtgitterlängen durch eine sehr geringe Anzahl von unterschiedlichen Komponenten abgedeckt werden.

Das Abschlussteil weist vorzugsweise keine Lichtdurchtrittsöffnungen und insbesondere auch keine Frontwand auf. Grundsätzlich kann es sich bei dem Abschlussteil aber auch um ein Teil handeln, das einem Basisteil ähnelt und sich von diesem beispielsweise außer durch die vorhandene Stirnwand durch eine abweichende Baulänge unterscheidet.

Es hat sich als vorteilhaft erwiesen, wenn ein erstes Gehäusemodul in wenigstens einem seiner Endbereiche einen Einsteckabschnitt aufweist, in dessen Bereich die Seitenwände stufenartig nach innen zurückversetzt sind, und ein zweites Gehäusemodul in einem seiner Endbereiche einen zu dem Einsteckabschnitt des ersten Gehäusemoduls komplementären Aufnahmeabschnitt aufweist, wobei der Einsteckabschnitt des ersten Gehäusemoduls in den Aufnahmeabschnitt des zweiten Gehäusemoduls einsteckbar ist. Somit können die Gehäusemodule in der benötigten Anzahl auf einfache Weise, insbesondere ohne zusätzliche Kopplungselemente, miteinander verbunden werden. Der Versatz der Seitenwände des ersten Gehäusemoduls im Einsteckabschnitt ist vorzugsweise so gewählt, dass dieser der Wandstärke der Seitenwände des zweiten Gehäusemoduls im Aufnahmeabschnitt entspricht. Somit ist ein flächenbündiger, stufenloser Verlauf der Außenseiten der Seitenwände über mehrere Gehäusemodule hinweg gewährleistet.

An dieser Stelle sei angemerkt, dass die Ausdrücke "erstes Gehäusemodul" und "zweites Gehäusemodul" dazu verwendet werden, um ein Gehäusemodul mit einem Einsteckabschnitt von einem mit diesem Gehäusemodul verbindbaren weiteren Gehäusemodul mit einem Aufnahmeabschnitt zu unterscheiden. Es versteht sich, dass das zweite, einen Aufnahmeabschnitt aufweisende Gehäusemodul in seinem anderen Endbereich einen Einsteckabschnitt aufweisen kann und somit in Bezug auf ein weiteres drittes Gehäusemodul, das ebenfalls einen Aufnahmeabschnitt aufweist, sozusagen ein erstes Gehäusemodul darstellt. Mit anderen Worten kann es Gehäusemodule geben, die nur einen Einsteckabschnitt, nur einen Aufnahmeabschnitt oder sowohl einen Einsteckabschnitt als auch einen Aufnahmeabschnitt aufweisen.

Um eine durchgehende Reihung der Lichtdurchtrittsöffnungen auch über Gehäusemodulgrenzen hinweg zu gewährleisten, kann vorgesehen sein, dass sich die Frontwand des ersten Gehäusemoduls in den Bereich des Einsteckabschnitts erstreckt, während am zweiten Gehäusemodul im Bereich des Aufnahmeabschnitts keine Frontwand vorgesehen ist. Somit erstreckt sich die im Bereich des Einsteckabschnitts des ersten Gehäusemoduls vorgesehene Frontwand zwischen die Seitenwände des Aufnahmeabschnitts des zweiten Gehäusemoduls.

Gemäß einer vorteilhaften Ausführungsform weisen die Seitenwände des ersten Gehäusemoduls im Bereich des Einsteckabschnitts an ihrer Außenseite in Längsrichtung des Lichtgittergehäuses verlaufende Führungsabschnitte auf, welche mit komplementären Führungsabschnitten zusammenwirken, die an den Innenseiten der Seitenwände des zweiten Gehäusemoduls im Bereich des Aufnahmeabschnitts vorgesehen sind. Dadurch wird eine besonders stabile, insbesondere knicksichere Steckverbindung zwischen den einzelnen Gehäusemodulen erreicht. Das Zusammenstecken der Gehäusemodule erfolgt entsprechend in der Längsrichtung des Lichtgittergehäuses. Die zugeordneten Paare von Führungsabschnitten können in beliebiger Weise ausgestaltet sein, beispielsweise in Form von Nut/Feder-Verbindungen, Schwalbenschwanzführungen, oder Führungen, bei welchen ein wulstartiger erster Führungsabschnitt von einem C-förmigen zweiten Führungsabschnitt umgriffen wird.

Vorteilhafterweise umfasst das erste Gehäusemodul eine Bodenabdeckung, welche im Bereich des Einsteckabschnitts eine mit einer nach außen weisenden Rastnase versehene Lasche aufweist, wobei das zweite Gehäusemodul eine Bodenabdeckung aufweist, welche im Bereich des Aufnahmeabschnitts eine Rastausnehmung aufweist, wobei die Lasche in den Innenraum des zweiten Gehäusemoduls hineinragt und wobei die Rastnase in die Rastausnehmung eingreift, um das erste Gehäusemodul mit dem zweiten Gehäusemodul zu verrasten. Vorteilhafterweise weist die Rastnase und/oder die Rastausnehmung eine Anlaufschräge auf. Die einzelnen Gehäusemodule können entsprechende Verrasteinrichtungen auch auf beiden Seiten aufweisen, um eine größere Anzahl Gehäusemodule zu verbinden. Bei den genannten Bodenabdeckungen kann es sich beispielsweise um die vorstehend genannte separat einsetzbare Bodenabdeckung oder um einen feststehenden, am Basisteil ausgebildeten Bodenabschnitt handeln.

Die Lasche ist dabei vorzugsweise gegenüber einer die Außenseite des Lichtgittergehäuses bildende Fläche der Bodenabdeckung nach innen zurückversetzt. Dadurch wird gewährleistet, dass die Außenseiten der Bodenabdeckungen der beiden Gehäuse im zusammengesteckten Zustand flächenbündig sind. Um eine stabile Verbindung zu gewährleisten, kann der Teilabschnitt der Bodenabdeckung des zweiten Gehäusemoduls, in dessen Bereich die Rastausnehmung vorgesehen ist, also im Bereich des Aufnahmeabschnitts einstückig mit den Seitenwänden gebildet sein.

In dem Zusammenhang ist es von Vorteil, wenn die Lasche einen z.B. kreisförmigen Membranabschnitt aufweist, dessen Dicke gegenüber der Dicke eines umgebenden Bereichs der Lasche vermindert ist, wobei die Rastnase an dem Membranabschnitt vorgesehen ist. Die Dicke oder Stärke des Membranabschnitts ist dabei so weit vermindert, dass der Membranabschnitt gegenüber dem umgebenden Bereich der Lasche eine erhöhte Flexibilität aufweist, die die zum Verrasten bzw. Entrasten der Gehäusemodule notwendige Bewegung der Rastnase zulässt. Je nach verwendetem Material sind hierfür einige wenige 100 µm Materialstärke ausreichend, um die erforderliche Dehnung des Membranabschnitts zu ermöglichen.

Gemäß einer vorteilhaften Ausführungsform ist an wenigstens einem Gehäusemodul endseitig eine Stirnwand vorgesehen, an welcher ein Ansatz angeordnet ist, der die Stirnwand in der Längsrichtung des Lichtgittergehäuses überragt und lediglich einen der Frontseite des Lichtgittergehäuses benachbarten Teilbereich der Stirnwand überdeckt, wobei der Ansatz wenigstens eine Kabeldurchlassöffnung aufweist, welche an einer der Frontseite abgewandten, zur Rückseite des Lichtgittergehäuses nach innen versetzt verlaufenden Seite des Ansatzes vorgesehen ist. Somit weist ein durch die Kabeldurchlassöffnung hindurch geführtes Kabel von der Frontseite des Lichtgitters betrachtet nach hinten. Da zwischen einer Montagefläche, auf welcher das Lichtgitter mit seiner Rückseite befestigt ist und dem Ansatz somit noch ein Zwischenraum verbleibt, ist es möglich, das durch die Kabeldurchlassöffnung hindurch geführte Kabel in verschiedene Richtungen zu führen. So kann beispielsweise das Kabel nach hinten durch die genannte Montagefläche hindurch geführt werden oder aber auch entlang der Montagefläche in beliebiger Richtung innerhalb eines der Stirnwand gegenüberliegenden, in der Ebene der Montagefläche verlaufenden etwa halbkreisförmigen Sektors.

In dem Zusammenhang hat es sich als vorteilhaft erwiesen, wenn an der die Kabelaustrittsöffnung (Kabeldurchlassöffnung) aufweisenden Seite des Ansatzes ein vorzugsweise konvex gewölbter, insbesondere halbkreisförmiger, Kabelführungsabschnitt vorgesehen ist, wobei der Kabelführungsabschnitt von einer durch die Rückseite des Lichtgittergehäuses definierten Ebene beabstandet ist, und wobei der Kabelführungsabschnitt bevorzugt eine in Umfangsrichtung verlaufende Nut aufweist. Die Nut verläuft also in Austrittsrichtung eines durch die Kabeldurchlassöffnung geführten Kabels. Der Kabelführungsabschnitt ermöglicht eine weitgehend knickfreie Führung eines aus der Kabeldurchtrittsöffnung austretenden Kabels, das in die gegebenenfalls vorhandene Nut eingelegt werden kann.

Ein erfindungsgemäßes Lichtgittergehäuse bietet die Möglichkeit, dass alle optisch relevanten Elemente (also insbesondere die Befestigungsflächen des Gehäuses, die optische Achse bzw. die Innenflächen der Tuben, die Blende, die Auflageflächen der Linsen und der Elektronikkarte) in einem Teil und insbesondere einstückig realisiert sind, wodurch die Toleranzenkette sehr kurz ist.

Die vorliegende Erfindung umfasst ferner ein Lichtgitter mit wenigstens einem erfindungsgemäßen Lichtgittergehäuse und einer im Lichtgittergehäuse vorgesehenen Anordnung von Lichtsendern oder Lichtempfängern, wobei die Lichtsender oder Lichtempfänger nur einer der jeweiligen Reihen von Lichtdurchtrittsöffnungen zugeordnet sind. Mit einem derartigen Lichtgitter werden die eingangs genannten Vorteile des erfindungsgemäßen Lichtgittergehäuses verwirklicht.

Gemäß einer vorteilhaften Ausführungsform des Lichtgitters umfasst das Lichtgittergehäuse mehrere durch eine jeweilige Steckverbindung verbindbare Basisteile, wobei in jedem Basisteil eine Leiterplatte vorgesehen ist, auf welcher insbesondere die diesem Basisteil zugeordneten Lichtsender oder Lichtempfänger angeordnet sind, und wobei die Leiterplatten untereinander über einen jeweiligen Steckverbinder verbindbar sind, welcher wenigstens eine Leiterplattenaufnahme aufweist, in welche eine der Leiterplatten in Längsrichtung des Lichtgittergehäuses einsteckbar ist. Die Steckverbinder sind demnach stirnseitig in Bezug auf die Längsrichtung des Lichtgittergehäuses vorgesehen. Beim Zusammenstecken der Basisteile wird also gleichzeitig eine elektrische Verbindung zwischen den in den Basisteilen angeordneten Leiterplatten hergestellt. Der Steckverbinder kann z.B. nur auf einer Seite eine Aufnahme aufweisen, während die andere Seite fest mit der zugeordneten Leiterplatte verbunden ist. Grundsätzlich ist es auch möglich, auf beiden Seiten des Steckverbinders eine jeweilige Aufnahme vorzusehen.

Gemäß einer vorteilhaften Ausführungsform des Lichtgitters umfasst das Lichtgittergehäuse ferner ein mit einem der Basisteile durch eine Steckverbindung verbindbares Abschlussteil, welches eine Steckbrücke mit einer Leiterplattenaufnahme aufweist, in welcher eine der Leiterplatten in Längsrichtung des Lichtgittergehäuses einsteckbar ist, wobei die Steckbrücke dazu ausgelegt ist, verschiedene Leiterbahnen einer eingesteckten Leiterplatte miteinander zu verbinden. Die Steckbrücke bildet sozusagen einen elektrischen Abschluss der Reihenanordnung der elektrischen Leiterbahnen. Die Steckbrücke kann beispielsweise dazu dienen, einer mit dem Lichtgitter verbindbaren oder innerhalb des Lichtgitters vorgesehenen Auswerteschaltung Informationen darüber zu liefern, wie viele Lichtsender bzw. Lichtempfänger innerhalb des jeweiligen Lichtgitters tatsächlich vorgesehen sind. Die Leiterplattenaufnahme der Steckbrücke kann hinsichtlich ihrer elektrischen und mechanischen Ausgestaltung der Leiterplattenaufnahme des Steckverbinders entsprechen, um das modulare Konzept des Lichtgittergehäuses auch in elektrischer Hinsicht zu verwirklichen. Das Schließen der elektrischen Verbindung zwischen der Leiterplatte und dem Steckverbinder bzw. der Steckbrücke erfolgt beim Zusammenstecken des entsprechenden Basisteils mit einem weiteren Basisteil oder einem Abschlussteil.

Vorteilhafterweise weist die Leiterplattenaufnahme des Steckverbinders und/oder die Leiterplattenaufnahme der Steckbrücke Kontaktabschnitte auf, welche unmittelbar mit jeweiligen zugeordneten Leiterbahnen einer eingesteckten Leiterplatte in elektrischem Kontakt stehen. Dadurch lässt sich auf besonders einfache und vor allem platzsparende Weise eine Kontaktierung zwischen den verschiedenen Leiterplatten zum Beispiel zur Ansteuerung der Lichtsender bzw. zur Auslesung der Lichtempfänger herstellen. Die Kontaktabschnitte können auf der Oberseite, der Unterseite oder beiden Seiten der Leiterplatte vorgesehen sein.

Weitere vorteilhafte Ausführungsformen der Erfindung sind in den Unteransprüchen, der Beschreibung und den Zeichnungen angegeben.

Die Erfindung wird nachfolgend anhand eines Ausführungsbeispiels mit Bezug auf die Zeichnungen beschrieben. Es zeigen:
- Fig. 1: ein zwei Lichtgitterleisten umfassendes erfindungsgemäßes Lichtgitter gemäß einem Ausführungsbeispiel,
- Fig. 2 und 3: verschiedene Seitenansichten einer Lichtgitterleiste des Lichtgitters von Fig. 1,
- Fig. 4: eine perspektivische Ansicht der Lichtgitterleiste von Fig. 2 und 3 im teilweise zerlegten Zustand,
- Fig. 5: die Lichtgitterleiste von Fig. 2 bis 4 in perspektivischer Explosionsdarstellung,
- Fig. 6: eine perspektivische Ansicht eines Gehäusemoduls der Lichtgitterleiste von Fig. 2 bis 5,
- Fig. 7: das Gehäusemodul von Fig. 6 in teilweise zerlegtem Zustand,
- Fig. 8 bis 10: ein Basisteil des Gehäusemoduls von Fig. 6 und 7 in verschiedenen Ansichten,
- Fig. 11: eine schematische Darstellung eines Formungsvorgangs für das Basisteil von Fig. 8 bis 10,
- Fig. 12 und 13: verschiedene Querschnittansichten, teils perspektivisch, durch die Lichtgitterleiste von Fig. 2 und 3, und
- Fig. 14 und 15: verschiedene Längsschnittansichten durch die Lichtgitterleiste von Fig. 2 und 3, und
- Fig. 16 bis 18: verschiedene perspektivische Teilansichten der Lichtgitterleiste von Fig. 2 und 3 mit unterschiedlich geführten Versorgungs-/Auswertekabeln bzw. Versorgungs- /Kommunikationskabeln.

Ein erfindungsgemäßes Lichtgitter 10 ist durch zwei Lichtgitterleisten 12 gebildet, welche ein vorzugsweise im Kunststoff-Spritzgussverfahren hergestelltes jeweiliges Lichtgittergehäuse 14 umfassen, wobei bei dem hier beschriebenen Ausführungsbeispiel die eine, als Sendeeinheit ausgebildete Lichtgitterleiste 12 ausschließlich Lichtsender und die andere, als Empfangseinheit ausgebildete Lichtgitterleiste 12 ausschließlich Lichtempfänger umfasst. Da für beide Einheiten das Lichtgittergehäuse 14 identisch ist, wird auf eine Unterscheidung zwischen Sendeeinheit und Empfangseinheit verzichtet.

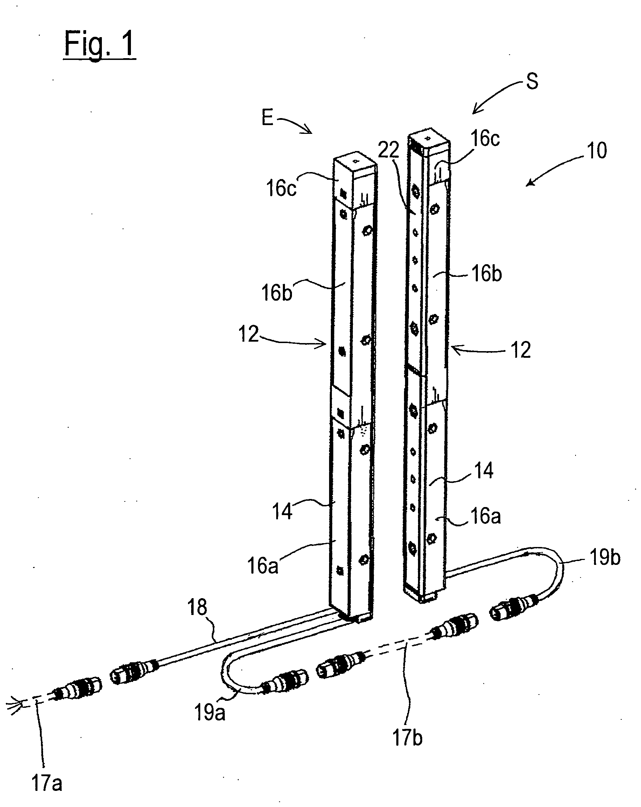

In Fig. 1 ist - nur beispielhaft - die linke Lichtgitterleiste 12 als Empfänger-Lichtgitterleiste E und die rechte Lichtgitterleiste 12 als Sender-Lichtgitterleiste S bezeichnet.

Jede Lichtgitterleiste 12 ist hier aus drei Gehäusemodulen 16a, 16b, 16c zusammengesetzt, die nachfolgend noch näher erläutert werden. Das Gehäusemodul 16a dient als Basismodul, das Gehäusemodul 16b als Erweiterungsmodul und das Gehäusemodul 16c als Abschlussmodul. Jede Lichtgitterleiste 12 umfasst zumindest ein Gehäusemodul 16a als Basismodul und ein Gehäusemodul 16c als Abschlussmodul. Zwischen diesen kann eine beliebige Anzahl von Gehäusemodulen 16b als Erweiterungsmodule vorgesehen werden.

Jede Lichtgitterleiste 12 weist beim gezeigten Beispiel ferner ein Versorgungs-/Kommunikationskabel 19b (bei der Sender-Lichtgitterleiste S) oder ein Versorgungs-/Auswertekabel 18 und ein Versorgungs-/Kommunikationskabel 19a (bei der Empfänger-Lichtgitterleiste E) auf, die endseitig an dem Gehäusemodul 16a vorgesehen sind. 17a bezeichnet eine Verlängerungsleitung und 17b eine Verbindungsleitung. Insbesondere kann die Sender-Lichtgitterleistenversorgung über das Versorgungs-/Auswertekabel 18, das Versorgungs-/Kommunikationskabel 19a, die Verbindungsleitung 17b und das Versorgungs-/Kommunikationskabel 19b angesteuert und mit Energie versorgt werden. Die Kabel dienen hier dabei jeweils einer Doppelfunktion, nämlich zur Auswertung (und der dazu notwendigen Auslesung der Empfänger) bzw. zur Kommunikation (z.B. zur Ansteuerung der Sender) einerseits und zur Versorgung andererseits.

Diese Ausgestaltung ermöglicht einen direkten Anschluss der Empfänger-Lichtgitterleiste E an einen Schaltschrank und eine Verbindung der Sender-Lichtgitterleiste über die Empfänger-Lichtgitterleiste E.

Entsprechend ist es - in hier nicht gezeigter Weise - aber auch möglich, dass die Sender-Lichtgitterleiste direkt mit einem Schaltschrank verbunden ist und die Empfänger-Lichtgitterleiste über die Sender-Lichtgitterleiste verbunden ist. Gegebenenfalls von der Empfänger-Lichtgitterleiste erzeugte Abschaltsignale werden dann über die Sender-Lichtgitterleiste zum Schaltschrank geleitet. Dies bietet den Vorteil, dass man Spannungsaufbereitung und Entstörung in/an der Sender-Lichtgitterleiste generieren kann und dann die Empfänger-Lichtgitterleiste damit versorgt. Die in der Empfänger-Lichtgitterleiste vorgesehene(n) Elektronikkarte(n) müssen dann weniger Funktionen erfüllen.

Abweichend von der gezeigten Ausgestaltung kann schließlich auch vorgesehen sein, dass jede Lichtgitterleiste gesondert über ein entsprechendes Anschlusskabel versorgt und angesteuert bzw. ausgelesen wird.

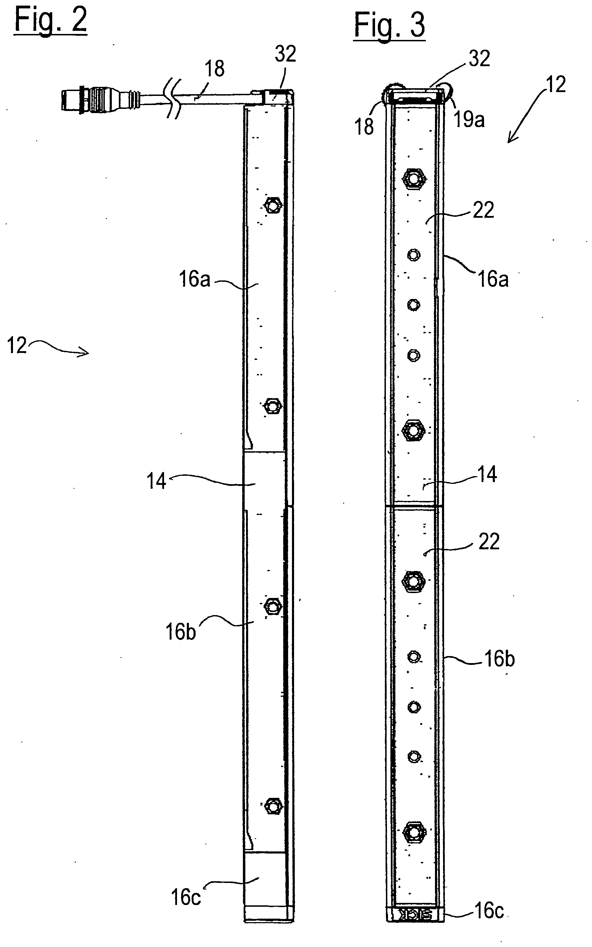

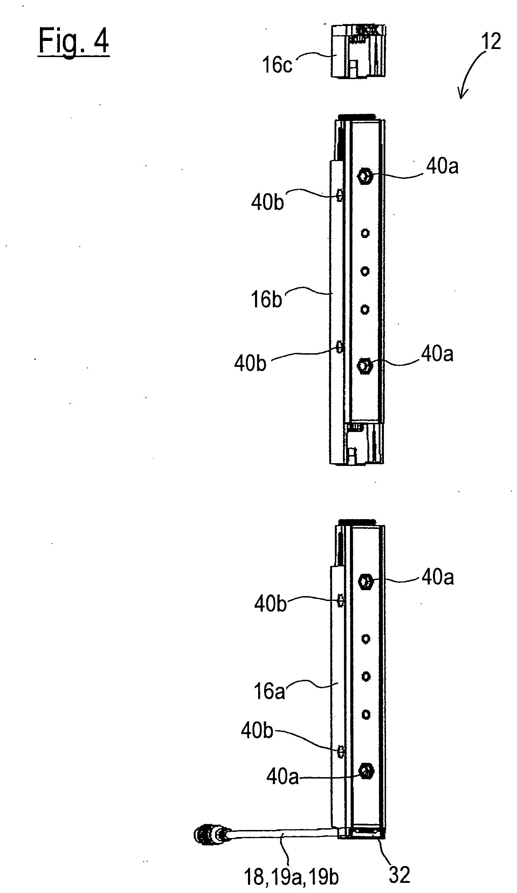

Wie insbesondere in den Fig. 4 bis 6 zu erkennen ist, umfassen die Gehäusemodule 16a, 16b ein jeweiliges Basisteil 20a bzw. 20b, welche bis auf die nachfolgend noch erläuterten Unterscheide baugleich sind. In Fig. 3 blickt man auf die Seite der transparenten Frontabdeckung 22 beispielsweise eines Empfängers.

Jedes Gehäusemodul 16a, 16b umfasst neben den genannten Basisteilen 20a, 20b eine auf der Frontseite des Lichtgittergehäuses 14 angeordnete transparente Frontabdeckung 22, zwischen der Frontabdeckung 22 und dem Basisteil 20a, 20b angeordnete, hier paarweise verbundene Linsenelemente 26, im Inneren der Basisteile 20a, 20b angeordnete Leiterplatten 28 und eine die Rückseite des jeweiligen Gehäusemoduls 16a, 16b verschließende, einen Bestandteil des Bodens bildende Bodenabdeckung 24.

Die Frontabdeckungen 22 und Bodenabdeckungen 24 können mit den zugeordneten Basisteilen 20a, 20b durch Verkleben oder Verschweißen, insbesondere durch Ultraschallschweißung, in staub- und feuchtigkeitsdichter Weise verbunden werden.

Das Basisteil 20a weist an seinem einen Ende, welches zugleich ein Ende des Lichtgittergehäuses 14 bildet, eine Stirnwand 34a auf, in deren Bereich ein später noch näher erläuterter Ansatz 32 vorgesehen ist und durch die das oder die mit einer der Leiterplatten 28a, 28b verbundenen Kabel 18, 19a, 19b nach außen geführt sind.

An dem anderen Ende des Basisteils 20a sowie an einem Ende des Basisteils 20b ist ein jeweiliger Einsteckabschnitt 36 ausgebildet.

Das Gehäusemodul 16c umfasst ein Abschlussteil 30, das an seinem einen Ende eine Stirnwand 34b aufweist.

An dem anderen Ende des Basisteils 20b sowie am anderen Ende des Abschlussteils 30 ist ein jeweiliger Aufnahmeabschnitt 38 ausgebildet.

Zwei Gehäusemodule 16a, 16b, bzw. 16c können durch Einstecken eines Einsteckabschnitts 36 in einen Aufnahmeabschnitt 38 miteinander verbunden werden. Die nähere Ausgestaltung der Einsteckabschnitte 36 und der Aufnahmeabschnitte 38 wird nachfolgend noch näher erläutert.

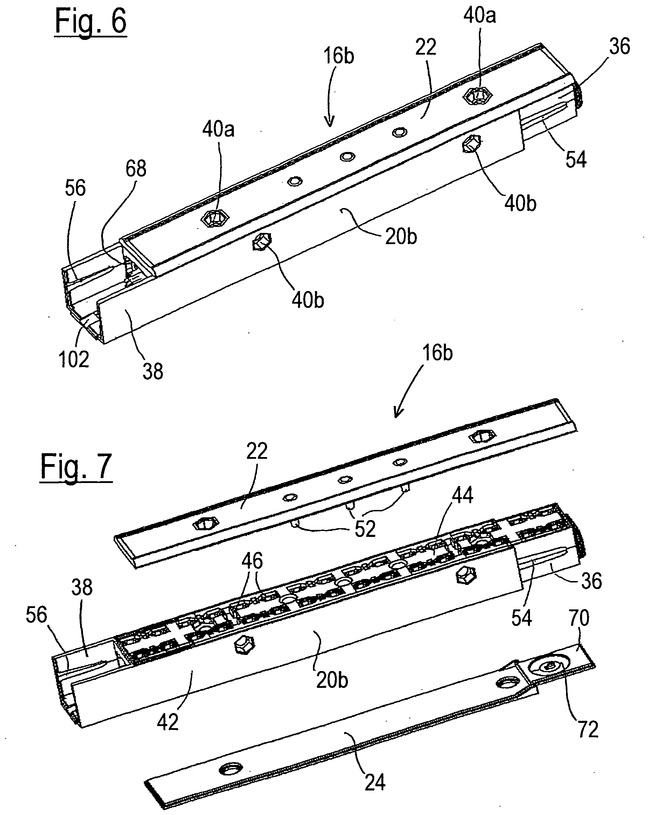

Am Beispiel des Gehäusemoduls 16b (siehe insbesondere Fig. 6 bis 10) wird im Folgenden der Aufbau der Gehäusemodule 16a, 16b näher beschrieben.

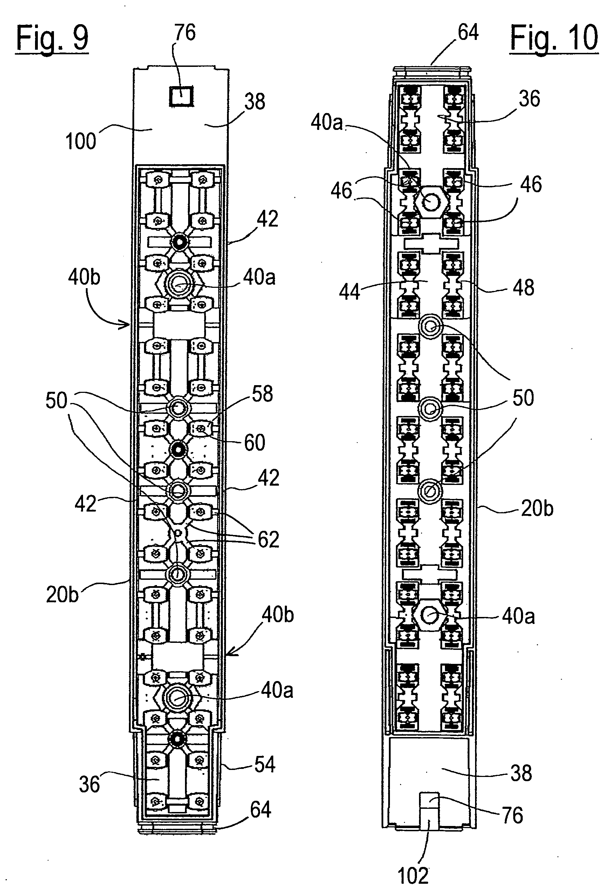

Jedes Basisteil 20a, 20b weist zwei seitlich voneinander beabstandete Seitenwände 42 auf, zwischen denen sich eine der Frontseite des Lichtgittergehäuses 14 zugewandte Frontwand 44 (siehe Fig. 10) erstreckt.
Die Frontwand 44 ist zwar im Bereich des Einsteckabschnitts 36, nicht jedoch im Bereich des Aufnahmeabschnitts 38 vorgesehen. Die Frontwand 44 weist eine Vielzahl von Lichtdurchtrittsöffnungen 46 mit einem Durchmesser von hier 4 mm auf, die in zwei in Längsrichtung des Gehäusemoduls 16b, d.h. in Längsrichtung des Lichtgittergehäuses 14, verlaufenden, voneinander beabstandeten Reihen in äquidistanter Weise mit einem Abstand von hier 13 mm innerhalb einer jeweiligen Reihe angeordnet sind.

Die Bestückung der Lichtgitterleisten 12 mit Lichtsendern bzw. Lichtempfängern kann derart erfolgen, dass jeder oder nur jeder zweiten Lichtaustrittsöffnung ein jeweiliger Lichtsender bzw. Lichtempfänger zugeordnet wird, so dass die Auflösung des Lichtgitters wahlweise 17 mm oder 30 mm beträgt.

Wie in Fig. 10, die eine Frontansicht des Basisteils 20b zeigt, gut zu erkennen ist, ist jeweils ein in derselben Reihe vorgesehenes Paar von Lichtdurchtrittsöffnungen 46 von einer Eintiefung oder Ausnehmung 48 umgeben, in welches ein jeweiliges Paar von Linsenelementen 26 eingesetzt ist. Ferner weist die Frontwand 44 drei Öffnungen 50 auf, durch die an der Frontabdeckung 22 vorgesehene Lichtleiter 52 in das Innere des Basisteils 20b durchgeführt sind. Über die Lichtleiter 52 kann Licht, das von auf der Leiterplatte 28 vorgesehenen Anzeigeelementen abgestrahlt wird, an die Frontseite des Gehäusemoduls 16b bzw. der Frontabdeckung 22 geführt und von einer dort aufgebrachten matten Struktur abgestrahlt werden.

Bei allen Gehäusemodulen, die einen Einsteckabschnitt 36 aufweisen, sind die Seitenwände 42 im Bereich des Einsteckabschnitts 36 nach innen zurückversetzt. Auf den zurückversetzten Seitenwänden 42 ist ein jeweiliger Führungsabschnitt in Gestalt einer schwalbenschwanzförmigen, konisch zulaufenden Erhebung 54 vorgesehen.

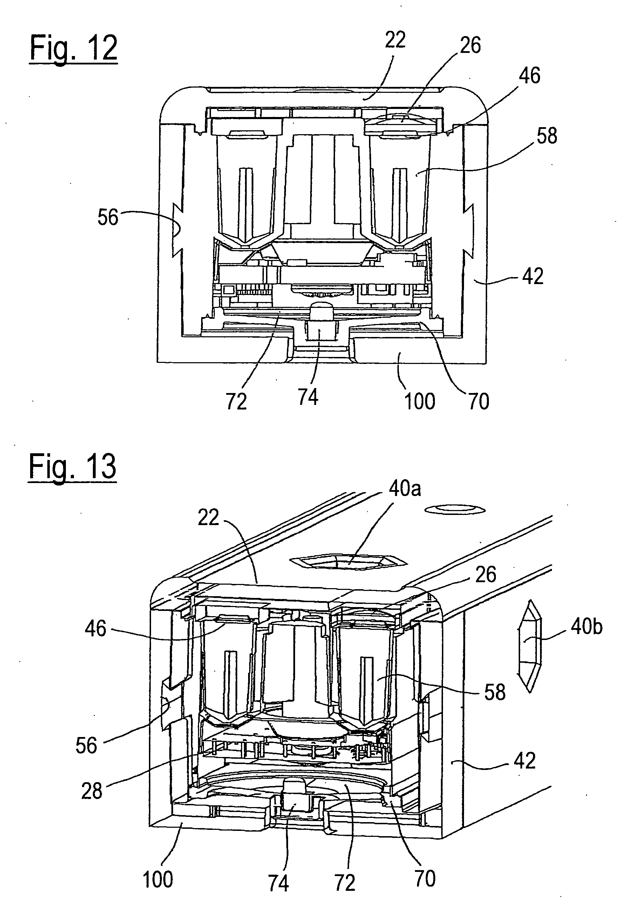

Weiterhin sind bei allen Gehäusemodulen, die einen Aufnahmeabschnitt 38 aufweisen, an den Innenseiten der Seitenwände 42 im Bereich des Aufnahmeabschnitts 38 zu den Erhebungen 54 komplementär ausgebildete Führungsabschnitte in Gestalt von ebenfalls schwalbenschwanzförmigen, konisch zulaufenden Nuten 56 ausgebildet (siehe auch Fig. 12 und 13).

Im zusammengesetzten Zustand greifen die Erhebungen 54 eines Gehäusemoduls in die Nuten 56 eines benachbarten Gehäusemoduls ein.

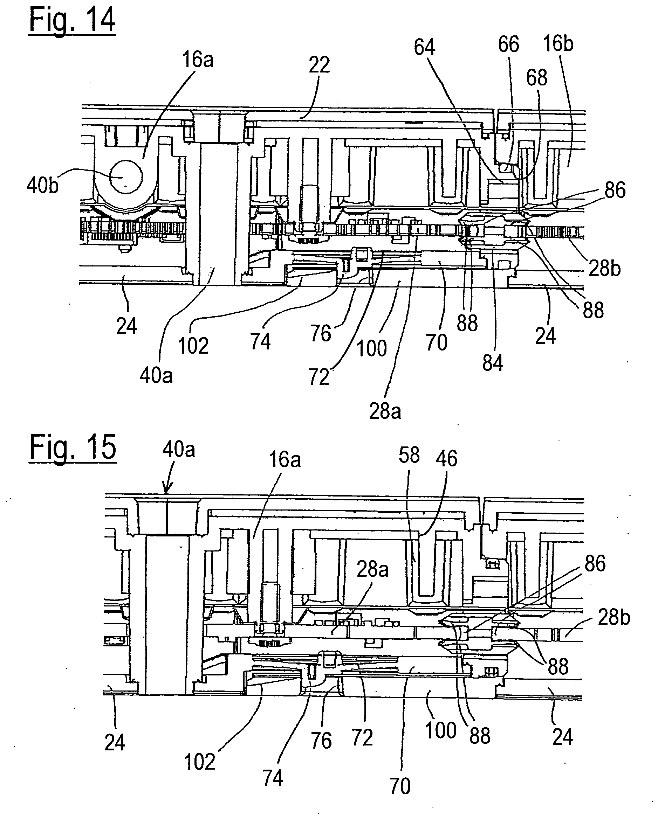

Am Einsteckabschnitt 36 ist stirnseitig eine flanschartig hervorstehende Durchführung 64 vorgesehen, die von einem in einer Nut gehaltenen Dichtring 66 umgeben ist. Wie insbesondere in Fig. 14 und 15, die zwei miteinander verbundene Gehäusemodule 16a, 16b zeigen, gut zu erkennen ist, greift die am Gehäusemodul 16a ausgebildete Durchführung 64 in eine am Gehäusemodul 16b ausgebildete komplementäre Öffnung 68 ein, welche dort benachbart zu dem Aufnahmeabschnitt 38 vorgesehen ist, wobei die gegenseitige Abdichtung der Gehäusemodule 16a, 16b durch den Dichtring 66 erfolgt.

Wie insbesondere in den Fig. 1 bis 4 gut zu erkennen ist, weisen die Gehäusemodule 16a, 16b mehrere Montagedurchgänge 40a, 40b auf, wobei sich die Montagedurchgänge 40a zwischen der Front- und Rückseite des Lichtgittergehäuses 14 durch die Frontabdeckungen 22, die Basisteile 20a, 20b und die Bodenabdeckungen 24 hindurch und sich die Montagedurchgänge 40b durch die Seitenwände 42 der Gehäusemodule 16a, 16b erstrecken.

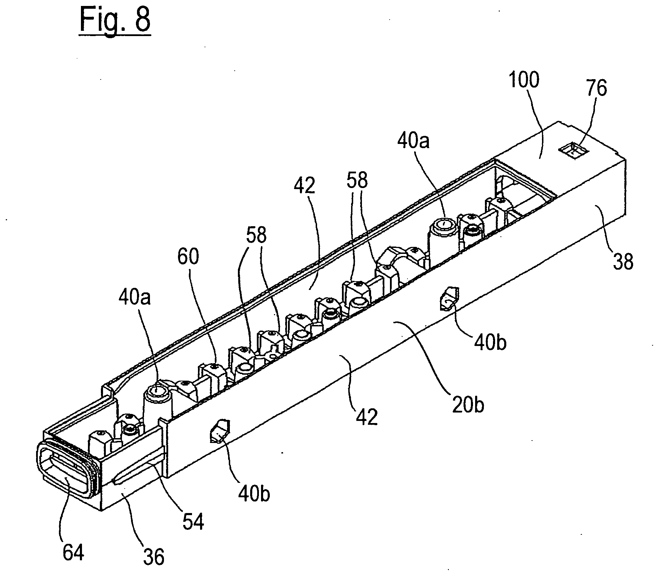

Wie aus Fig. 8 und Fig. 9, die eine Ansicht der Rückseite des Basisteils 20b zeigen, ersichtlich ist, ist an der Rückseite der Frontwand 44 eine Vielzahl von Tuben 58 angeordnet, wobei jeder Lichtdurchtrittsöffnung 46 ein Tubus 58 zugeordnet ist. Jeder Tubus 58 weist an seinem der Lichtdurchtrittsöffnung 46 gegenüberliegenden Ende eine Apertur 60 auf, durch welche das Sende- bzw. Empfangslicht in Richtung von den Sendeeinheiten bzw. zu den Empfangseinheiten hindurchtritt. Wie in Fig. 9 gut zu erkennen ist, sind die Tuben 58 über verschiedene Stege 62 mit den Seitenwänden 42 und benachbarten Tuben 58 verbunden, gegebenenfalls unter Einbeziehung von Wandungen der Öffnungen 50 bzw. der Montagedurchgänge 40a, 40b.

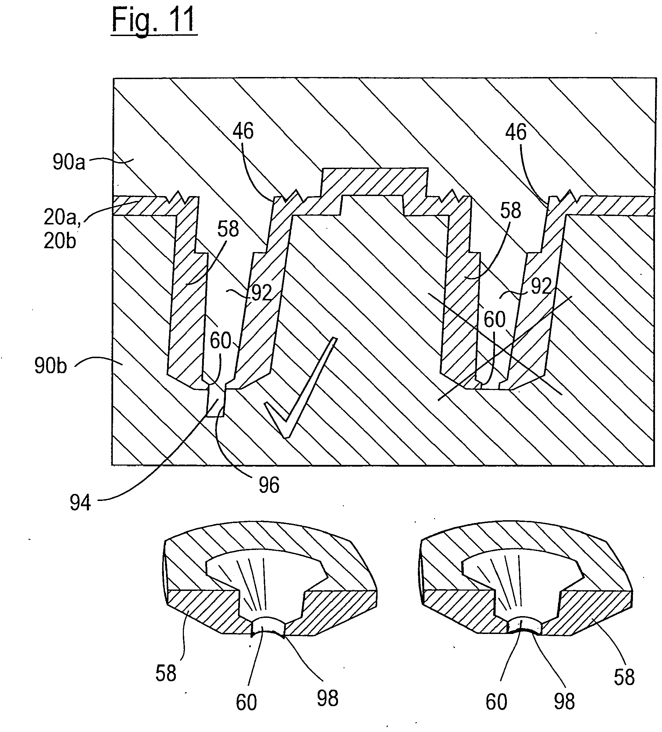

Mit Bezug auf Fig. 11 wird nachstehend die Formung der Tuben 58 an den Basisteilen 20a, 20b erläutert. Die Herstellung der Basisteile 20a, 20b erfolgt vorzugsweise im Spritzgussverfahren durch Ausspritzen eines zwischen zwei Spritzgussformen 90a, 90b vorhandenen Hohlraums. Um eine Ausformung der Lichtdurchtrittsöffnungen 46 und der Hohlräume der Tuben 58 zu ermöglichen, weist die Spritzgussform 90a vorstehende Tubusabschnitte 92 auf, welche eine Negativform des Inneren der Tuben 58 bilden.

Bei der Variante, die in der rechten Bildhälfte dargestellt ist, erstreckt sich der Tubusabschnitt 92 im Bereich der Apertur 60 bis an die Spritzgussform 90b heran. Da sich hier die Trennstelle zwischen den Spritzgussformen 90a, 90b im Kantenbereich der Apertur 60 befindet, entstehen während des Spritzvorgangs einwärts in die Apertur 60 ragende Grate 98, die beim Betrieb des Lichtgitters dazu führen, dass ein von den Lichtsendern erzeugter Lichtfleck an seinen Rändern eine Unschärfe aufweist.

Um dies zu vermeiden, kann bei einer Spritzgussform 90a, die in einem Verfahren zur Herstellung eines erfindungsgemäßen Lichtgittergehäuses 14 zum Einsatz kommen kann, der Tubusabschnitt 92 zusätzlich eine Spitze 94 aufweisen, welche sich in eine an der Spritzgussform 90b eingebrachte Vertiefung 96 hinein erstreckt (siehe linke Hälfte von Fig. 11). Zwar lässt sich auch hier eine Bildung eines Grates 98 nicht vollständig verhindern, dieser weist jedoch nicht mehr in den Bereich der Apertur 60 hinein, sondern axial nach unten, so dass der durch die Apertur 60 verlaufende Strahlengang nicht mehr behindert wird.

Mit Bezug auf Fig. 12 bis 15 wird nunmehr die Ausgestaltung der Steckverbindung zwischen den Gehäusemodulen 16a, 16b, 16c näher erläutert.

In Fig. 14 und 15 ist diese Steckverbindung im Längsschnitt für eine Verbindung zwischen den Gehäusemodulen 16a, 16b gezeigt, wobei die Verbindung zwischen den Gehäusemodulen 16b und 16c auf entsprechende Weise ausgestaltet ist.

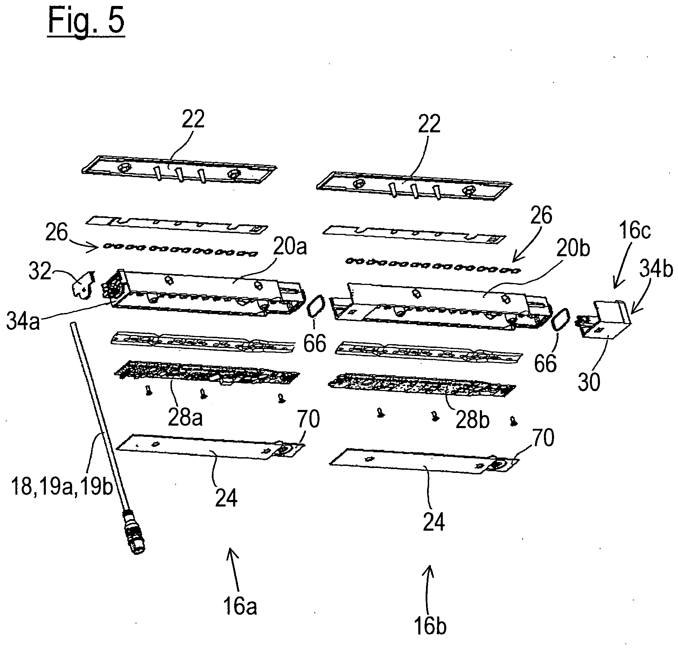

Die Bodenabdeckung 24 des Gehäusemoduls 16a weist im Bereich des Einsteckabschnitts 36 eine Lasche 70 auf, die in Bezug auf eine durch die Außenseite der Bodenabdeckung 24 definierte rückseitige Ebene des Lichtgittergehäuses 14 stufenartig zurückversetzt ist (siehe auch Fig. 5 und 7). Die Lasche 70 weist einen kreisförmigen Membranabschnitt 72 auf, dessen Dicke gegenüber der Dicke des den Membranabschnitt 72 umgebenden Bereichs der Lasche 70 derart vermindert ist, dass der Membranabschnitt 72 eine erhöhte Flexibilität aufweist. Je nach verwendetem Material für die Bodenabdeckung 24 beträgt die Dicke des Membranabschnitts 72 einige 100 pm, z.B. 0,6 mm (hier unter Verwendung von ABS-Kunststoff). An dem Membranabschnitt 72 ist eine nach außen weisende Rastnase 74 ausgebildet.

Am Gehäusemodul 16b ist ein Teil des Bodens im Bereich des Aufnahmeabschnitts 38 als ein an die Bodenabdeckung 24 angrenzender feststehender Bodenabschnitt 100 ausgebildet, der einstückig mit den Seitenwänden 42 des Basisteils 20b verbunden ist. Der Bodenabschnitt 100 weist eine Rastausnehmung 76 sowie eine nach innen gerichtete Anlaufschräge 102 auf.

Wenn die Gehäusemodule 16a, 16b zusammengesteckt werden, gleitet die Rastnase 74 über die Anlaufschräge 102, wobei der Membranabschnitt 72 elastisch verformt wird. Sobald die Gehäusemodule 16a, 16b ihre Verbindungsstellung erreicht haben, federt der Membranabschnitt 72 in seine Ausgangstellung zurück und bringt die Rastnase 74 mit der Rastausnehmung 76 in Eingriff.

Zum Lösen der Rastverbindung kann die Rastnase 74 entgegen der Kraft des Membranabschnitts 72 mit Hilfe eines geeigneten Werkzeugs zurückgedrückt werden, so dass sich die Gehäusemodule 16a, 16b wieder trennen lassen.

Im Bereich der Durchführung 64 ist ein Steckverbinder 84 angeordnet, welcher zwei einander gegenüberliegende Leiterplattenaufnahmen 86 aufweist. Im Bereich der Leiterplattenaufnahmen 86 befinden sich mehrere federnde Kontaktabschnitte 88, welche Leiterbahnen, die auf beiden Seiten der im Gehäusemodul 16a angeordneten Leiterplatte 28 aufgebracht sind, mit Leiterbahnen der im Gehäusemodul 16b angeordneten Leiterplatte 28 verbindet. Der Steckverbinder 84 kann mit einer der beiden Leiterplatten 28 beispielsweise durch Klebung fest verbunden sein.

Im Abschlussteil 30 kann eine nicht dargestellte Steckbrücke vorgesehen sein, welche entsprechend dem Steckverbinder 84 ausgestaltet ist, im Unterschied zu diesem jedoch nur eine einzige Leiterplattenaufnahme mit entsprechenden Kontaktabschnitten aufweist. Mit Hilfe der Steckbrücke können Leiterbahnen, die auf der im Gehäusemodul 16b angeordneten Leiterplatte 28 vorgesehen sind, untereinander verbunden werden, wobei sowohl Leiterbahnen auf derselben Seite der Leiterplatte 28 als auch auf der Ober- und Unterseite angeordnete Leiterbahnen miteinander verbunden werden, wobei U-förmig gebogene Kontaktabschnitte verwendet werden können, die im letzteren Fall die Leiterplatte 28 umgreifen.

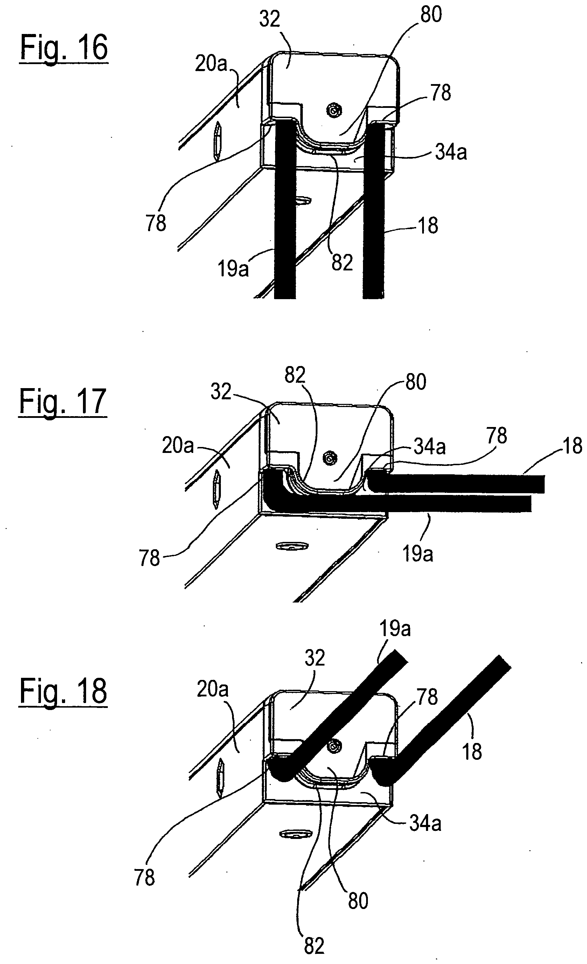

Mit Bezug auf Fig. 16 bis 18 wird nun die Ausgestaltung der Stirnwand 34a des Basisteils 20a des Gehäusemoduls 16a näher erläutert.

Wie bereits erwähnt, befindet sich an der Stirnwand 34a des Basisteils 20a ein Ansatz 32, der die Stirnwand 34a in der Längsrichtung des Lichtgittergehäuses 14 überragt und lediglich einen der Frontseite des Lichtgittergehäuses 14 benachbarten Teilbereich der Stirnwand 34a überdeckt.

Im vorliegenden Ausführungsbeispiel weist der Ansatz 32 zwei Kabeldurchlassöffnungen 78 auf, welche an einer der Frontseite abgewandten, in Bezug auf die Rückseite des Lichtgittergehäuses 14 nach innen versetzt verlaufenden Seite des Ansatzes 32 vorgesehen ist. Durch jede Kabeldurchlassöffnung 78 ist hier bei der Empfänger-Lichtgitterleiste ein Versorgungs-/Auswertekabel 18 und ein Versorgungs-/Kommunikationskabel 19a hindurchgeführt. Bei der Sender-Lichtgitterleiste wird nur eine Kabeldurchlassöffnung 78 für das Versorgungs-/Kommunikationskabel 19b benötigt. Die andere wird durch einen Stopfen von innen verschlossen.

An der die Kabeldurchlassöffnungen 78 aufweisenden Seite des Ansatzes 32 ist ferner ein konvex gewölbter, näherungsweise halbkreisförmiger Kabelführungsabschnitt 80 vorgesehen, welcher von einer durch die Rückseite des Lichtgittergehäuses 14 definierten Ebene beabstandet ist. Der Abstand beträgt vorzugsweise etwas mehr als der Durchmesser der Kabeldurchlassöffnungen 78, so dass ein ausreichender Raum für die Kabel 18, 19a, 19b zwischen dem Kabelführungsabschnitt 80 und einer durch die Rückseite des Lichtgittergehäuses 14 definierten Befestigungsebene verbleibt. Der Kabelführungsabschnitt 80 weist eine in Umfangsrichtung verlaufende Nut 82 auf.

Durch diese Ausgestaltung der Stirnwand 34a bestehen verschiedene Möglichkeiten, die Anschlusskabel 18, 19a, 19b weitgehend knickfrei zu führen, wobei in Fig. 16 bis 18 nur einige dieser Möglichkeiten dargestellt sind.

Es versteht sich, dass alternativ oder zusätzlich die am Abschlussteil 30 vorhandene Stirnwand 34b in gleichartiger Weise wie die vorstehend beschriebene Stirnwand 34a ausgestaltet sein kann.

Abschließend sei angemerkt, dass sich die Basisteile 20a und 20b hier nur in der Ausgestaltung ihres einen Endbereichs unterscheiden, welcher am Basisteil 20b den Einsteckabschnitt 36 und am Basisteil 20a die Stirnwand 34a mit dem Ansatz 32 umfasst. Die übrigen Bereiche sind identisch, so dass beide Basisteile 20a, 20b prinzipiell mit derselben Spritzgussform hergestellt werden können. Es ist lediglich ein Austausch von entsprechenden Formeinsätzen für die unterschiedliche Ausgestaltung des einen Endbereichs notwendig. Für beide Basisteile 20a, 20b können identische Frontabdeckungen 22 und Bodenabdeckungen 24 verwendet werden.

Letztlich ermöglicht das modulare Konzept des erfindungsgemäßen Lichtgittergehäuses 14 und seine universelle Verwendbarkeit sowohl für Sendeals auch für Empfangseinheiten eine besonders rationelle Fertigung.

### Bezugszeichenliste

- 10: Lichtgitter
- 12: Lichtgitterleiste
- 14: Lichtgittergehäuse
- 16a, 16b, 16c: Gehäusemodul
- 17a: Verlängerungsleitung
- 17b: Verbindungsleitung
- 18: Versorgungs-/Auswertekabel
- 19a, 19b: Versorgungs-/Kommunikationskabel
- 20a, 20b: Basisteil
- 22: Frontabdeckung
- 24: Bodenabdeckung
- 26: Linsenelemente
- 28, 28a, 28b: Leiterplatte
- 30: Abschlussteil
- 32: Ansatz
- 34a, 34b: Stirnwand
- 36: Einsteckabschnitt
- 38: Aufnahmeabschnitt
- 40a, 40b: Montagedurchgang
- 42: Seitenwand
- 44: Frontwand
- 46: Lichtdurchtrittsöffnung
- 48: Ausnehmung
- 50: Öffnung
- 52: Lichtleiter
- 54: Erhebung
- 56: Nut
- 58: Tubus
- 60: Apertur
- 62: Steg
- 64: Durchführung
- 66: Dichtring
- 68: Öffnung
- 70: Lasche
- 72: Membranabschnitt
- 74: Rastnase
- 76: Rastausnehmung
- 78: Kabeldurchlassöffnung
- 80: Kabelführungsabschnitt
- 82: Nut
- 84: Steckverbinder
- 86: Leiterplattenaufnahme
- 88: Kontaktabschnitt
- 90a, 90b: Spritzgussform
- 92: Tubusabschnitt
- 94: Spitze
- 96: Vertiefung
- 98: Grat
- 100: Bodenabschnitt
- 102: Anlaufschräge

- E: Empfänger-Lichtgitterleiste
- S: Sender-Lichtgitterleiste

## Patentansprüche

1. Lichtgitter, mit
wenigstens einem Lichtgittergehäuse (14),welches wenigstens ein längliches, sich in einer Längsrichtung des Lichtgittergehäuses (14) erstreckendes Basisteil (20a, 20b) aufweist, welches zwei sich in der Längsrichtung erstreckende, seitlich voneinander beabstandete Seitenwände (42) und eine sich zwischen den Seitenwänden (42) erstreckende Frontwand (44) umfasst, wobei die Frontwand (44) eine Vielzahl von Lichtdurchtrittsöffnungen (46) aufweist,
wobei die Lichtdurchtrittsöffnungen (46) in zwei seitlich voneinander beabstandeten, sich in der Längsrichtung erstreckenden Reihen angeordnet sind, und
wobei in einem jeweiligen Lichtgittergehäuse (14) nur Lichtsender oder nur Lichtempfänger angeordnet sind,
**dadurch gekennzeichnet,**
**dass** die Lichtsender oder Lichtempfänger nur einer der beiden Reihen von Lichtdurchtrittsöffnungen (46) zugeordnet sind und die andere Reihe von Lichtdurchtrittsöffnungen (46) nicht genutzt ist.

2. Lichtgitter nach Anspruch 1,
**dadurch gekennzeichnet,**
**dass** die beiden Reihen von Lichtdurchtrittsöffnungen (46) in der Längsrichtung betrachtet versatzfrei angeordnet sind.

3. Lichtgitter nach Anspruch 1 oder 2,
**dadurch gekennzeichnet,**
**dass** jeder Lichtdurchtrittsöffnung (46) ein die Lichtdurchtrittsöffnung (46) umschließender Tubus (58) zugeordnet ist, welcher sich von der Frontwand (44) in einen von den Seitenwänden (42) umgrenzten Innenraum des Basisteils (20a, 20b) erstreckt, wobei bevorzugt jeder Tubus (58) einstückig mit dem Basisteil (20a, 20b) gebildet ist.

4. Lichtgitter nach Anspruch 3,
**dadurch gekennzeichnet,**
**dass** Wandungen zumindest eines Teiles der Tuben (58) unmittelbar und/oder über einen Steg (62) mit der dem jeweiligen Tubus (58) benachbarten Seitenwand (42) und/oder
mit einer Wandung eines in diagonaler Richtung benachbarten Tubus (58) verbunden sind.

5. Lichtgitter nach einem der vorhergehenden Ansprüche,
**dadurch gekennzeichnet,**
**dass** das Basisteil (20a, 20b) wenigstens einen Montagedurchgang (40a, 40b) aufweist, welcher sich durch das Basisteil (20a, 20b) hindurch zwischen zwei sich gegenüberliegenden Außenwänden des Basisteils (20a, 20b) erstreckt.

6. Lichtgitter nach einem der vorhergehenden Ansprüche,
**dadurch gekennzeichnet,**
**dass** die Rückseite des Basisteils (20a, 20b) zumindest abschnittsweise durch eine separat einsetzbare Bodenabdeckung (24) verschlossen ist.

7. Lichtgitter nach einem der vorhergehenden Ansprüche,
**dadurch gekennzeichnet,**
**dass** die Frontwand (44) des Basisteils (20a, 20b) durch eine lichtdurchlässige Frontabdeckung (22) abgedeckt ist.

8. Lichtgitter nach einem der vorhergehenden Ansprüche,
**dadurch gekennzeichnet,**
**dass** das Lichtgittergehäuse (14) mehrere in der Längsrichtung nacheinander angeordnete, durch eine jeweilige Steckverbindung verbindbare Gehäusemodule (16a, 16b, 16c) umfasst, wobei ein jeweiliges Gehäusemodul (16a, 16b, 16c) ein genanntes Basisteil (20a, 20b) oder ein Abschlussteil (30) umfasst, wobei das Abschlussteil (30) zumindest zwei sich in der Längsrichtung erstreckende, seitlich voneinander beabstandete Seitenwände und eine sich zwischen den Seitenwänden erstreckende, quer zur der Längsrichtung verlaufende Stirnwand (34b) aufweist.

9. Lichtgitter nach Anspruch 8,
**dadurch gekennzeichnet,**
**dass** ein erstes Gehäusemodul (16a, 16b) in einem Endbereich einen Einsteckabschnitt (36) aufweist, in dessen Bereich die Seitenwände (42) stufenartig nach innen zurückversetzt sind, und
**dass** ein zweites Gehäusemodul (16b, 16c) in einem Endbereich einen zu dem Einsteckabschnitt (36) des ersten Gehäusemoduls (16a, 16n) komplementären Aufnahmeabschnitt (38) aufweist, wobei der Einsteckabschnitt (36) des ersten Gehäusemoduls (16a, 16b) in den Aufnahmeabschnitt (38) des zweiten Gehäusemoduls (16b, 16c) einsteckbar ist.

10. Lichtgitter nach Anspruch 9,
**dadurch gekennzeichnet,**
**dass** die Seitenwände (42) des ersten Gehäusemoduls (16a, 16b) im Bereich des Einsteckabschnitts (36) an ihrer Außenseite in der Längsrichtung verlaufende Führungsabschnitte (54) aufweisen, welche mit komplementären Führungsabschnitten (56) zusammenwirken, die an den Innenseiten der Seitenwände (42) des zweiten Gehäusemoduls (16b, 16c) im Bereich des Aufnahmeabschnitts (38) vorgesehen sind.

11. Lichtgitter nach einem der Ansprüche 8 bis 10,
**dadurch gekennzeichnet,**
**dass** das erste Gehäusemodul (16a, 16b) eine separat einsetzbare Bodenabdeckung (24) oder einen feststehenden, am Basisteil ausgebildeten Bodenabschnitt umfasst, welche im Bereich des Einsteckabschnitts (36) eine mit einer nach außen weisenden Rastnase (74) versehene Lasche (70) aufweisen, und
**dass** das zweite Gehäusemodul (16b, 16c) eine separat einsetzbare Bodenabdeckung oder einen feststehenden, am Basisteil ausgebildeten Bodenabschnitt (100) umfasst, welche im Bereich des Aufnahmeabschnitts (28) eine Rastausnehmung (76) aufweisen, wobei die Lasche (70) in den Innenraum des zweiten Gehäusemoduls (16b, 16c) hineinragt und wobei die Rastnase (74) in die Rastausnehmung (76) eingreift, um das erste Gehäusemodul (16a, 16b) mit dem zweiten Gehäusemodul (16b, 16c) zu verrasten.

12. Lichtgitter nach Anspruch 11,
**dadurch gekennzeichnet,**
**dass** die Lasche (70) einen insbesondere kreisförmigen Membranabschnitt (72) aufweist, dessen Dicke gegenüber der Dicke eines umgebenden Bereichs der Lasche (70) vermindert ist, und dass die Rastnase (74) an dem Membranabschnitt (72) vorgesehen ist.

13. Lichtgitter nach einem der Ansprüche 8 bis 12,
**dadurch gekennzeichnet,**
**dass** an wenigstens einem Gehäusemodul (16a, 16c) endseitig eine Stirnwand (34a, 34b) vorgesehen ist, an welcher ein Ansatz (32) angeordnet ist, der die Stirnwand (34a, 34b) in der Längsrichtung überragt und lediglich einen der Frontseite des Lichtgittergehäuses (14) benachbarten Teilbereich der Stirnwand (34a, 34b) überdeckt, wobei der Ansatz (32) wenigstens eine Kabeldurchlassöffnung (78) aufweist, welche an einer der Frontseite abgewandten, in Bezug auf die Rückseite des Lichtgittergehäuses (14) nach innen versetzt verlaufenden Seite des Ansatzes (32) vorgesehen ist.

14. Lichtgitter nach Anspruch 13,
**dadurch gekennzeichnet,**
**dass** an der die Kabeldurchlassöffnung (78) aufweisenden Seite des Ansatzes (32) ein konvex gewölbter, insbesondere näherungsweise halbkreisförmiger, Kabelführungsabschnitt (80) vorgesehen ist, wobei der Kabelführungsabschnitt (80) von einer durch die Rückseite des Lichtgittergehäuses (14) definierten Ebene beabstandet ist, und wobei der Kabelführungsabschnitt (80) bevorzugt eine in Umfangsrichtung verlaufende Nut (82) aufweist.

15. Lichtgitter nach einem der vorhergehenden Ansprüche,
**dadurch gekennzeichnet,**
**dass** das Lichtgittergehäuse (14) mehrere durch eine jeweilige Steckverbindung verbindbare Basisteile (20a, 20b) umfasst,
wobei in jedem Basisteil (20a, 20b) eine Leiterplatte (28, 28a, 28b) vorgesehen ist, auf welcher insbesondere die diesem Basisteil (20a, 20b) zugeordneten Lichtsender oder Lichtempfänger angeordnet sind, und wobei die Leiterplatten (28, 28a, 28b) untereinander über einen jeweiligen Steckverbinder (84) verbindbar sind, welcher wenigstens eine Leiterplattenaufnahme (86) aufweist, in welche eine der Leiterplatten (28, 28a, 28b) in der Längsrichtung einsteckbar ist.

16. Lichtgitter nach Anspruch 15,
**dadurch gekennzeichnet,**
**dass** das Lichtgittergehäuse (14) ferner ein mit einem der Basisteile (20a, 20b) durch eine Steckverbindung verbindbares Abschlussteil (30) umfasst, welches eine Steckbrücke mit einer Leiterplattenaufnahme aufweist, in welche eine der Leiterplatten (28, 28a, 28b) in der Längsrichtung einsteckbar ist, wobei die Steckbrücke dazu ausgelegt ist, verschiedene Leiterbahnen einer eingesteckten Leiterplatte (28, 28a, 28b) miteinander zu verbinden.

17. Lichtgitter nach Anspruch 16,
**dadurch gekennzeichnet,**
**dass** die Leiterplattenaufnahme (86) des Steckverbinders (84) und/oder die Leiterplattenaufnahme der Steckbrücke Kontaktabschnitte (88) aufweist, welche unmittelbar mit jeweiligen zugeordneten Leiterbahnen einer eingesteckten Leiterplatte (28, 28a, 28b) in elektrischem Kontakt stehen.

## Claims

1. A light grid comprising
at least one light grid housing (14) which has at least one elongate base part (20a, 20b) which extends in a longitudinal direction of the light grid housing (14) and which comprises two side walls (42), which extend in the longitudinal direction and which are laterally spaced apart from one another, and a front wall (44) which extends between the side walls (42), wherein the front wall (44) has a plurality of light passage openings (46);
wherein the light passage openings (46) are arranged in two rows which are laterally spaced apart from one another and which extend in the longitudinal direction; and
wherein only light transmitters or only light receivers are arranged in a respective light grid housing (14),
**characterized in that**
the light transmitters or light receivers are only associated with one of the two rows of light passage openings (46) and the other row of light passage openings (46) is not used.

2. A light grid in accordance with claim 1,
**characterized in that**
the two rows of light passage openings (46) are arranged without offset, viewed in the longitudinal direction.

3. A light grid in accordance with claim 1 or claim 2,
**characterized in that**
a tube (58) surrounding the light passage opening (46) is associated with each light passage opening (46) and extends from the front wall (44) into an inner space of the base part (20a, 20b) bounded by the side walls (42),
with each tube (58) preferably being formed in one piece with the base part (20a, 20b).

4. A light grid in accordance with claim 3,
**characterized in that**
walls of at least one part of the tubes (58) are connected directly and/or via a web (62) to the side wall (42) adjacent to the respective tube (58) and/or
are connected to a wall of a tube (58) adjacent in a diagonal direction.

5. A light grid in accordance with any one of the preceding claims,
**characterized in that**
the base part (20a, 20b) has at least one assembly passage (40a, 40b) which extends through the base part (20a, 20b) between two oppositely disposed outer walls of the base part (20a, 20b).

6. A light grid in accordance with any one of the preceding claims,
**characterized in that**
the rear side of the base part (20a, 20b) is at least sectionally closed by a separately insertable base cover (24).

7. A light grid in accordance with any one of the preceding claims,
**characterized in that**
the front wall (44) of the base part (20a, 20b) is covered by a light permeable front cover (22).

8. A light grid in accordance with any one of the preceding claims,
**characterized in that**
the light grid housing (14) comprises a plurality of housing modules (16a, 16b, 16c) which are arranged after one another in the longitudinal direction and which are connectable by a respective plug connection, with a respective housing module (16a, 16b, 16c) comprising a named base part (20a, 20b) or an end part (30), with the end part (30) having at least two side walls, which extend in the longitudinal direction and which are laterally spaced apart from one another, and an end wall (34b) which extends between the side walls and which extends transversely to the longitudinal direction.

9. A light grid in accordance with claim 8,
**characterized in that**
a first housing module (16a, 16b) has a plug-in section (36) in an end region, with the side walls (42) being inwardly set back in a stepped manner in the region of said plug-in section; and
**in that** a second housing module (16b, 16c) has a reception section (38) in an end region, said reception section being complementary to the plug-in section (36) of the first housing module (16a, 16b), with the plug-in section (36) of the first housing module (16a, 16b) being able to plugged into the reception section (38) of the second housing module (16b, 16c).

10. A light grid in accordance with claim 9,
**characterized in that**
the side walls (42) of the first housing module (16a, 16b) have guide sections (54) at their outer side in the region of the plug-in section (36), said guide sections extending in the longitudinal direction and cooperating with complementary guide sections (56) which are provided at the inner sides of the side walls (42) of the second housing module (16b, 16c) in the region of the reception section (38).

11. A light grid in accordance with any one of the claims 8 to 10,
**characterized in that**
the first housing module (16a, 16b) has a separately insertable base cover (24) or a fixed-position base section formed at the base part, which base cover and base section have a tongue (70) provided with an outwardly facing latch nose (74) in the region of the plug-in section (36); and
**in that** the second housing module (16b, 16c) comprises a separately insertable base cover or a fixed-position base section (100) formed at the base part, which base cover and base part have a latch recess (76) in the region of the reception section (38), with the tongue (70) projecting into the inner space of the second housing module (16b, 16c) and with the latch nose (74) engaging into the latch recess (76) to latch the first housing module (16a, 16b) to the second housing module (16b, 16c).

12. A light grid in accordance with claim 11,
**characterized in that**
the tongue (70) has a membrane section (72) which is in particular of circular shape and whose thickness is reduced with respect to the thickness of a surrounding region of the tongue (70); and **in that** the latch nose (74) is provided at the membrane section (72).

13. A light grid in accordance with any one of the claims 8 to 12,
**characterized in that**
an end wall (34a, 34b) is provided at the end side at at least one housing module (16a, 16c) and a shoulder (32) is arranged at said end wall which projects over the end wall (34a, 34b) in the longitudinal direction and only covers a part region of the end wall (34a, 34b) adjacent to the front side of the light grid housing (14), with the shoulder (32) having at least one cable passage opening (78) which is provided at a side of the shoulder (32) which is remote from the front side and which extends inwardly offset with respect to the rear side of the light grid housing (14).

14. A light grid in accordance with claim 13,
**characterized in that**
a convexly arched cable guide section (80) which is in particular approximately of semi-circular shape is provided at the side of the shoulder (32) having the cable passage opening (78), with the cable guide section (80) being spaced apart from a plane defined by the rear side of the light grid housing (14), and with the cable guide section (80) preferably having a groove (82) extending in the peripheral direction.

15. A light grid in accordance with any one of the preceding claims,
**characterized in that**
the light grid housing (14) comprises a plurality of base parts (20a, 20b) connectable by a respective plug connection,
with a circuit board (28, 28a, 28b) being provided in each base part (20a, 20b), with the light transmitters or light receivers associated with this base part (20a, 20b) in particular being arranged on said circuit board, and with the circuit boards (28, 28a, 28b) being connectable to one another via a respective plug connector (84) which has at least one circuit board receiver (86) into which one of the circuit boards (28, 28a, 28b) can be plugged in the longitudinal direction.

16. A light grid in accordance with claim 15,
**characterized in that**
the light grid housing (14) furthermore comprises an end part (30) which is connectable to one of the base parts (20a, 20b) by a plug connection and which has a jumper having a circuit board receiver into which one of the circuit boards (28, 28a, 28b) can be plugged in the longitudinal direction, with the jumper being adapted to connect different conductive tracks of a plugged-in circuit board (28, 28a, 28b) to one another.

17. A light grid in accordance with claim 16,
**characterized in that**
the circuit board receiver (86) of the plug connector (84) and/or the circuit board receiver of the jumper has/have contact sections (88) which are directly in electrical contact with respective associated conductive tracks of a plugged-in circuit board (28, 28a, 28b).

## Revendications

1. Grille lumineuse, comportant
au moins un boîtier de grille lumineuse (14) qui comprend au moins une partie de base (20a, 20b) allongée s'étendant dans une direction longitudinale du boîtier de grille lumineuse (14) et présentant deux parois latérales (42) s'étendant en direction longitudinale et latéralement espacées l'une de l'autre et une paroi frontale (44) s'étendant entre les parois latérales (42), la paroi frontale (44) présentant une multitude d'ouvertures de passage de lumière (46),
les ouvertures de passage de lumière (46) étant agencées en deux rangées latéralement espacées l'une de l'autre et s'étendant en direction longitudinale, et
soit uniquement des émetteurs de lumière soit uniquement des récepteurs de lumière sont agencés dans un boîtier de grille lumineuse (14) respectif,
**caractérisée en ce que**
les émetteurs de lumière ou les récepteurs de lumière ne sont associés qu'à l'une des deux rangées d'ouvertures de passage de lumière (46) et l'autre rangée d'ouvertures de passage de lumière (46) n'est pas utilisée.

2. Grille lumineuse selon la revendication 1,
**caractérisée en ce que**
les deux rangées d'ouvertures de passage de lumière (46) sont agencées sans décalage, vues en direction longitudinale.

3. Grille lumineuse selon la revendication 1 ou 2,
**caractérisée en ce que**
à chaque ouverture de passage de lumière (46) est associé un tube (58) entourant l'ouverture de passage de lumière (46), qui s'étend depuis la paroi frontale (44) jusque dans un volume intérieur de la partie de base (20a, 20b) qui est délimité par les parois latérales (42),
et de préférence chaque tube (58) est réalisé d'un seul tenant avec la partie de base (20a, 20b).

4. Grille lumineuse selon la revendication 3,
**caractérisée en ce que**
des parois d'une partie au moins des tubes (58) sont reliées directement à la paroi latérale (42) voisine du tube respectif (58) et/ou elles y sont reliées par une barrette (62), et/ou
elles sont reliées à une paroi d'un tube (58) voisin en direction diagonale.

5. Grille lumineuse selon l'une des revendications précédentes,
**caractérisée en ce que**
la partie de base (20a, 20b) présente au moins un passage de montage (40a, 40b) qui s'étend à travers la partie de base (20a, 20b) entre deux parois extérieures opposées de la partie de base (20a, 20b).

6. Grille lumineuse selon l'une des revendications précédentes,
**caractérisée en ce que**
la face arrière de la partie de base (20a, 20b) est refermée au moins localement par un recouvrement de fond (24) susceptible d'être inséré séparément.

7. Grille lumineuse selon l'une des revendications précédentes,
**caractérisée en ce que**
la paroi frontale (44) de la partie de base (20a, 20b) est recouverte par un recouvrement frontal translucide (22).

8. Grille lumineuse selon l'une des revendications précédentes,
**caractérisée en ce que**
le boîtier de grille lumineuse (14) comprend plusieurs modules de boîtier (16a, 16b, 16c) agencés les uns derrière les autres en direction longitudinale et susceptibles d'être reliés par une liaison d'enfichage respective, un module de boîtier respectif (16a, 16b, 16c) comprenant une partie de base (20a, 20b) ou une partie de terminaison (30), la partie de terminaison (30) comprenant au moins deux parois latérales s'étendant en direction longitudinale et latéralement espacées l'une de l'autre, et une paroi frontale (34b) s'étendant entre les parois latérales transversalement à la direction longitudinale.

9. Grille lumineuse selon la revendication 8,
**caractérisée en ce que**
dans une zone d'extrémité, un premier module de boîtier (16a, 16b) comprend une portion d'enfichage (36) au niveau de laquelle les parois latérales (42) sont décalées en gradin vers l'intérieur, et
**en ce que**, dans une zone d'extrémité, un second module de boîtier (16b, 16c) présente une portion de logement (38) complémentaire à la portion d'enfichage (36) du premier module de boîtier (16a, 16b), la portion d'enfichage (36) du premier module de boîtier (16a, 16b) pouvant être enfichée dans la portion de logement (38) du second module de boîtier (16b, 16c).

10. Grille lumineuse selon la revendication 9,
**caractérisée en ce que**
au niveau de la portion d'enfichage (36), sur leur face extérieure, les parois latérales (42) du premier module de boîtier (16a, 16b) présentent des portions de guidage (54) s'étendant en direction longitudinale qui coopèrent avec des portions de guidage complémentaires (56) qui sont prévues sur les faces intérieures des parois latérales (42) du second module de boîtier (16b, 16c) au niveau de la portion de logement (38).

11. Grille lumineuse selon l'une des revendications 8 à 10,
**caractérisée en ce que**
le premier module de boîtier (16a, 16b) comprend un recouvrement de fond (24) susceptible d'être inséré séparément ou une portion de fond stationnaire réalisée sur la partie de base, qui présentent au niveau de la portion d'enfichage (36) une patte (70) pourvue d'un ergot d'enclenchement (74) dirigé vers l'extérieur, et
**en ce que** le second module de boîtier (16b, 16c) comprend un recouvrement de fond susceptible d'être inséré séparément ou une portion de fond stationnaire (100) réalisée sur la partie de base, qui présentent au niveau de la portion de logement (28) un évidement d'enclenchement (76), la patte (70) pénétrant dans le volume intérieur du second module de boîtier (16b, 16c) et l'ergot d'enclenchement (74) venant s'engager dans l'évidement d'enclenchement (76) pour faire enclencher le premier module de boîtier (16a, 16b) avec le second module de boîtier (16b, 16c).

12. Grille lumineuse selon la revendication 11,
**caractérisée en ce que**
la patte (70) comprend une portion de membrane (72) en particulier en forme circulaire dont l'épaisseur est réduite par rapport à l'épaisseur d'une zone entourant de la patte (70), et
**en ce que** l'ergot d'enclenchement (74) est prévu sur la portion de membrane (72).

13. Grille lumineuse selon l'une des revendications 8 à 12,
**caractérisée en ce que**
du côté extrémité, sur au moins un module de boîtier (16a, 16c), il est prévu une paroi frontale (34a, 34b) sur laquelle est agencé un embout (32) qui dépasse au-delà de la paroi frontale (34a, 34b) en direction longitudinale et qui ne recouvre qu'une zone partielle de la paroi frontale (34a, 34b) voisine de la face frontale du boîtier de grille lumineuse (14), l'embout (32) présentant au moins une ouverture de passage de câble (78) qui est prévue sur une face de l'embout (32) qui est détournée de la face frontale et qui est décalée vers l'intérieur par rapport à la face arrière du boîtier de grille lumineuse (14).

14. Grille lumineuse selon la revendication 13,
**caractérisée en ce que**
sur la face de l'embout (32) présentant l'ouverture de passage de câble (78), il est prévu une portion de guidage de câble (80) bombée convexe, en particulier approximativement en forme de demi-cercle, la portion de guidage de câble (80) étant espacée d'un plan défini par la face arrière du boîtier de grille lumineuse (14), et la portion de guidage de câble (80) présente de préférence une gorge (82) s'étendant en direction périphérique.

15. Grille lumineuse selon l'une des revendications précédentes,
**caractérisée en ce que**
le boîtier de grille lumineuse (14) comprend plusieurs parties de base (20a, 20b) susceptibles d'être reliées par une liaison d'enfichage respective, une carte à circuits (28, 28a, 28b) étant prévue dans chaque partie de base (20a, 20b) sur laquelle sont agencés en particulier les émetteurs de lumière ou les récepteurs de lumière associés à cette partie de base (20a, 20b), et les cartes à circuits (28, 28a, 28b) peuvent être connectées les unes aux autres par un connecteur d'enfichage respectif (84) qui présente au moins un logement de carte à circuits (86) dans lequel peut venir s'enficher l'une des cartes à circuits (28, 28a, 28b) en direction longitudinale.

16. Grille lumineuse selon la revendication 15,
**caractérisée en ce que**
le boîtier de grille lumineuse (14) comprend en outre une partie de terminaison (30) qui peut être reliée à l'une des parties de base (20a, 20b) par une liaison d'enfichage et qui présente un pont d'enfichage avec un logement de carte à circuits dans lequel peut venir s'enficher l'une des cartes à circuits (28, 28a, 28b) en direction longitudinale, le pont d'enfichage étant conçu pour relier différentes pistes conductrices d'une carte à circuits enfichée (28, 28a, 28b).

17. Grille lumineuse selon la revendication 16,
**caractérisée en ce que**
le logement de carte à circuits (86) du connecteur d'enfichage (84) et/ou le logement de carte à circuits du pont d'enfichage comprend des portions de contact (88) qui sont directement en contact électrique avec des pistes conductrices respectives associées d'une carte à circuits enfichée (28, 28a, 28b).
